# EUROPEAN PATENT APPLICATION

(11) **EP 1 898 138 A1**
(43) Date of publication of application: **12.03.2008**
(21) Application number: 06120380.8
(22) Date of filing: 08.09.2006
(51) Int. Cl.: F16L 27/107, B67D 5/36

(54) **Spring loaded swivel joint for fuel dispenser**

(71) Applicant: Dresser Wayne Aktiebolag, 200 61 Malmö (SE)
(72) Inventor: Larsson, Bengt I., 274 53 Skivarp (SE); Birkler, Annika, 211 28 Malmö (SE); Persson, Lars, 216 22 Limhamn (SE)
(74) Representative: Milanov, Nina Vendela Maria

(57) **Abstract**

A fuel dispensing apparatus comprises a fuel line (3) for transporting fuel from a fuel reservoir (2), a flexible fuel dispensing hose (11) for dispensing the fuel to a vehicle, and a piping component (5) configured to connect the fuel dispensing hose (11) to the fuel line (3). The piping component comprises a resilient element (7) configured to move the piping component (5) from a first position to a second position.

## Description

### Technical Field

The present invention relates to a fuel dispensing apparatus for refuelling vehicles.

### Background Art

A fuel pump typically comprises a pump part standing on the ground, a display part positioned above the pump part and showing the chosen type of petrol, cash readout, volume readout etc, and a column to which one or more petrol hoses are connected.

When the tank of a vehicle is to be filled up, the driver parks the vehicle beside the petrol pump and opens the cover or cap of the vehicle's petrol tank. Then the driver selects the desired type of petrol and places the pump nozzle mounted at the end of the hose in the inlet of the vehicle's petrol tank and puts in the desired volume of petrol.

A difficulty that may arise is that the hose tends to land on the ground when it is not used and thus get stuck in or be damaged by passing cars or other vehicles. To address this problem many fuel pumps incorporate hose handling devices for pulling in the hose or for giving the hose a specific, safe position once the filling-operation is complete.

US-2,930,514, for example, discloses a liquid dispensing apparatus incorporating improvements in flexible hose handling equipment for gasoline pumps. The apparatus provides a rigid, spring loaded arm rotatably mounted on the top of the apparatus to encase and support a flexible hose. In an upstream direction the hose passes through the arm and is subsequently connected to a fuel line. During a filling operation a user pulling the hose will cause the arm to swing in the pulling direction, and when the fuel filling operation is complete, the spring loaded arm is returned to its initial position due to the biasing force of the spring. Hence the hose is removed and returned to a more protected position at the side of the dispensing apparatus.

A problem with present fuel dispensing apparatuses having hose handling devices is that the manoeuvring of the hose tends to be cumbersome. Moreover, the hose handling devices are relatively bulky as well as expensive in respect of both manufacture and maintenance.

### Summary of the Invention

It is an object of the present invention to provide an improvement of the above techniques and prior art.

A particular object is to provide a fuel dispensing apparatus incorporating less complex means for positioning the hose, which means offer a low total cost while still being able to give the hose a desired position.

These and other objects as well as advantages that will be apparent from the following description of the present invention are achieved by an apparatus having the features of the independent claim. Preferred embodiments are defined in the dependent claims.

Hence a fuel dispensing apparatus is provided, which comprises a fuel line for transporting fuel from a fuel reservoir, a flexible fuel dispensing hose for dispensing the fuel to a vehicle, and a piping component configured to connect the fuel dispensing hose to the fuel line. The piping component also comprises a fuel inlet connected to the fuel line and a fuel outlet connected to the fuel dispensing hose. The piping component comprises a resilient element configured to move the piping component from a first position to a second position.

The inventive dispensing apparatus is highly advantageous in that, since the hose is connected to the piping component and hence under its influence, it provides a straightforward way of moving the hose to a specific, desirable position, i.e. the hose position associated with the second position of the piping component. Moreover, it is possible to provide a very compact design of the piping component, which facilitates the design of the dispensing apparatus.

The dispensing apparatus may further comprise a lower housing and at least one column connecting an upper housing with the lower housing, the piping component being arranged at the upper housing. This embodiment is advantageous in that no further hose guiding means acting on the flexible hose are necessary.

The upper housing may comprise a recess for the fuel dispensing hose, which decreases the risk of damaging the hose when the piping component moves from the first position to the second position or vice versa.

The piping component may comprise a swivel, for providing a piping component made of standardized and low-cost elements.

The piping component may comprise a control means for defining the second position of the piping component, for assisting in providing the specific, desirable hose position associated with the second position of the piping component.

The piping component may comprise a first part comprising the fuel inlet, and a second part comprising the fuel outlet and being movable in relation to the first part, which further assists in providing the specific, desirable hose position as well as contributes to a piping component that is easy to install and connect at its inlet/outlet.

The fuel dispensing apparatus may comprise an upper part of the fuel dispensing hose being connected to the second part of the piping component, while the resilient element is configured to bias the second part for moving the upper part of the fuel dispensing hose in a substantially horizontal direction towards the fuel dispensing apparatus, which provides a solution where the hose is easily positioned out of the way of any passing vehicle.

The upper part of the fuel dispensing hose may be configured to hang, in a downward direction, from the second part of the piping component, for providing user-friendly operation of the hose.

The resilient element may be configured to move the second part of the piping component from said first position to said second position, which again assists in providing the specific, desirable hose position.

The second part of the piping component may be configured to pivot about a substantially horizontal axis, from said first position to said second position, which provides a simple structure of the piping component as well as provides a clearly defined position for the hose as a result of said first and second positions.

The resilient means may comprise a first end connected to the first part of the piping component and a second end connected to the second part of the piping component, or the resilient means may comprise a first end connected to the upper housing, and a second end connected to the piping component. Each embodiment is advantageous in that the position of the second part of the piping component may be well defined.

It should be noted that a "piping component" is a component that constitutes a part of a fluid flow line, i.e. fluid flows through the component without leakage. Accordingly, the piping component may be configured to sealingly connect the fuel dispensing hose to the fuel line.

### Brief Description of the Drawings

Embodiments of the present invention will now be described, by way of example, with reference to the accompanying schematic drawings, in which
Fig. 1 is a schematic side view of a fuel dispensing apparatus with a piping component in a second position,
Fig. 2 is a schematic side view of a fuel dispensing apparatus with a piping component in a first position,
Fig. 3 is a perspective view of a recess in an upper fuel dispensing housing,
Fig. 4a & 4b are side views of a piping component according to a first embodiment,
Fig. 5a & 5b are front and side views of a piping component according to a second embodiment, and
Fig. 6 is a schematic side view of a piping component according to a third embodiment.

### Detailed Description of Preferred Embodiments of the Invention

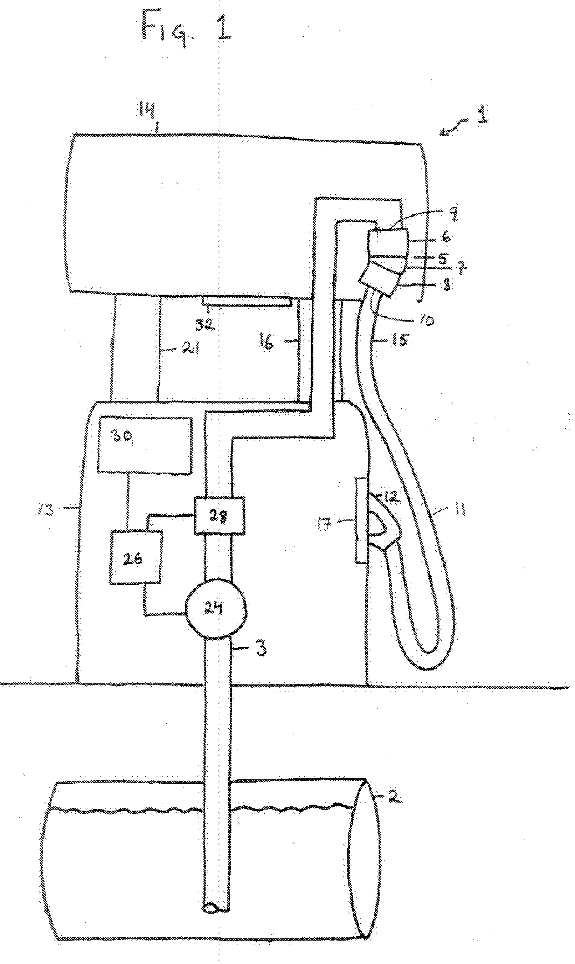

Fig. 1 illustrates a fuel dispensing apparatus 1 connected to a fuel reservoir 2 via a fuel line 3 for transporting fuel. A fuel pump 24 and a flow meter 28 are arranged in the fuel line 3 and are each connected to a control unit 26. The fuel line 3 runs through a lower housing 13 to an upper housing 14 via a column 16, which column 16 is arranged to connect the upper housing 14 with the lower housing 13. The upper housing 14 comprises illumination means 32 and a display panel 30 operatively connected to the control unit 26.

The fuel line 3 is connected to a fuel inlet 9 of a first part 6 of a piping component 5, and a second part 8 of the piping component 5 comprises a fuel outlet 10 to which a flexible fuel dispensing hose 11 is connected. At the other end of the flexible dispensing hose 11 a dispensing nozzle 12 is connected. When the dispensing apparatus 1 is not operated, the dispensing nozzle 12 typically rests in a nozzle boot 17 arranged on the lower housing 13.

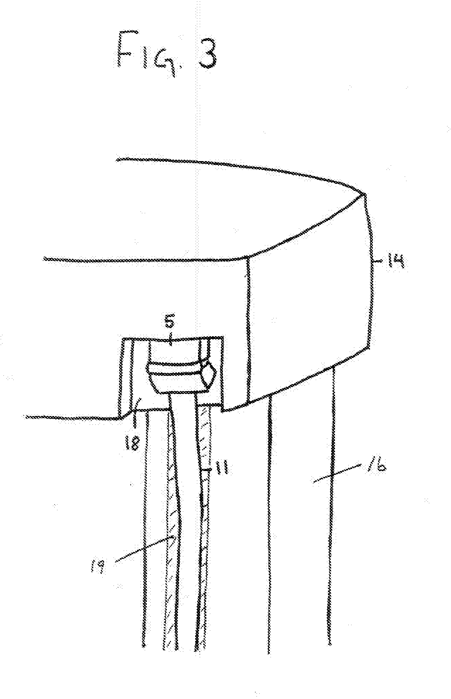

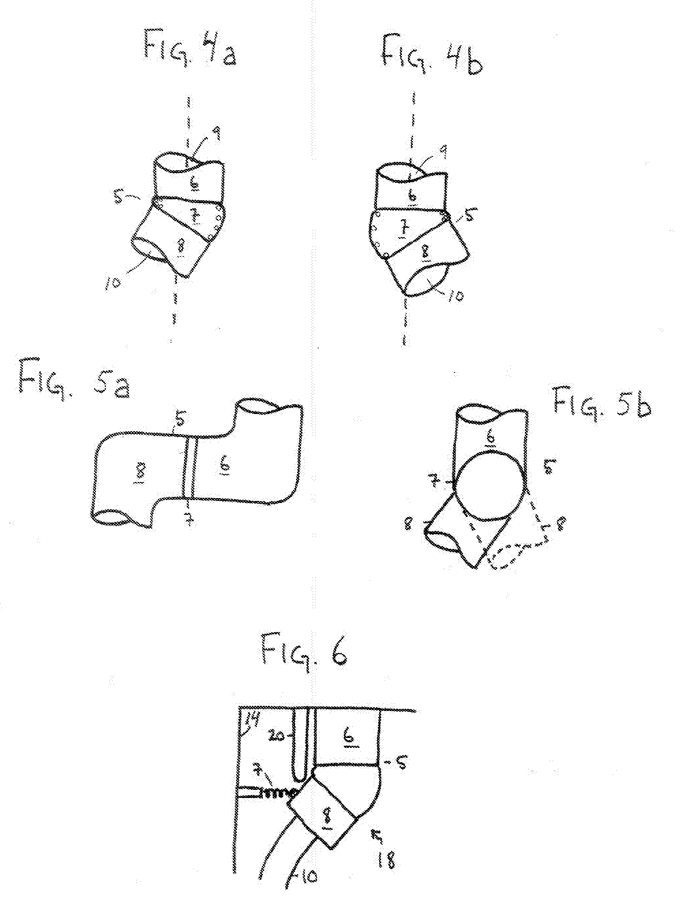

The first part 6 of the piping component 5 is fixedly attached at the upper housing 14, and the second part 8 of the piping component 5 is pivotably connected to the first part 6 of the piping component 5. A resilient element 7 having the form of a coil spring (see Figs 4a and 4b) is at one end connected to the first part 6 and is at one end connected to the second part 8, and biases the second part 8 in a direction towards the column 16.

When the fuel dispensing apparatus 1 is operated the fuel pump 24 starts pumping fuel from the fuel reservoir 2, through the fuel line 3, through the first 6 and the second 8 part of the piping component 5, through the flexible dispensing hose 11 and out from the dispensing nozzle 12.

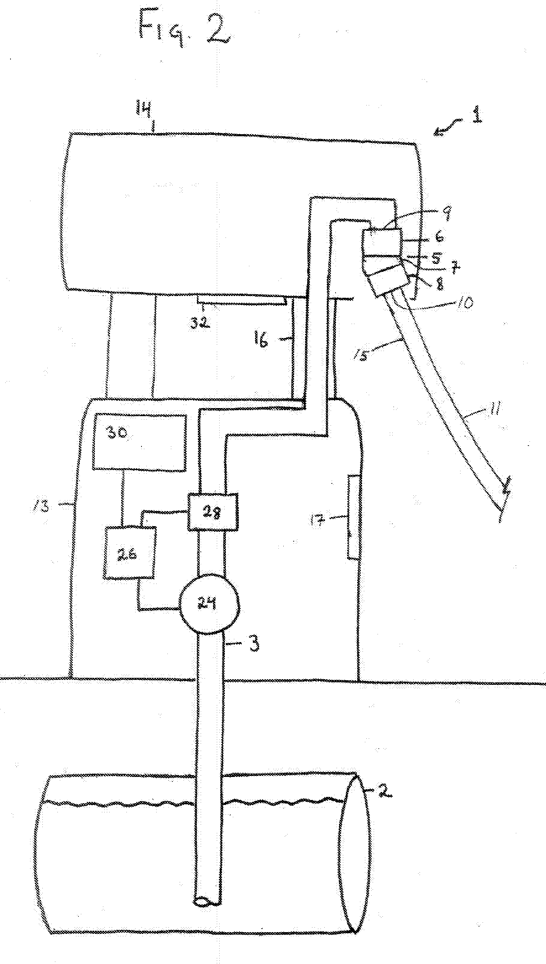

With reference to Fig. 2, the flexible dispensing hose 11 allows the operator to park his vehicle (not shown) at a distance from the fuel dispensing apparatus 1. When the flexible dispensing hose 11 is pulled out from the fuel dispensing apparatus 1, the pivotable connection between the first piping component part 6 and the second piping component part 8 allows the fuel outlet 10 of the piping component to align with the direction of the pulled out flexible dispensing hose 11. This situation represents the piping component 5 in its first position (Fig. 2).

When the dispensing nozzle 12 after use is returned to the nozzle boot 17, the force acting on the flexible dispensing hose 11 caused by the operator is released. Thereby the second part 8 of the piping component 5 is pivoted by the resilient element 7, towards the dispensing apparatus 1, or towards the column 16. This situation represents the piping component 5 in its second position (see Fig. 1).

Preferably, the resilient element 7 is arranged to continuously bias the piping component 5 for maintaining it in the second position.

Fig. 3 is an enlarged view of a recess 18 in the upper housing 14. The piping component 5 is mounted at the upper housing 14 with its outlet 10 substantially facing the recess 18, and the hose 11 is protruding through the recess 18.

With reference to Fig. 4a, the piping component 5 is illustrated in the second position while Fig. 4b shows the piping component 5 in the first position. In this first embodiment, the piping component 5 of the fuel dispensing apparatus comprises a first part 6, a second part 8 pivotably connected to the first part, and a resilient element 7 in the form of a compression spring which is connected to and biased between the first 6 and the second 8 part of the piping component 5. Of course, the connection between the first 6 and second 8 part allows fluid communication therebetween, and preferably the piping component 5 is a swivel incorporating sealing members for sealingly, in respect of a fuel flow, connecting the fuel line 3 with the fuel dispensing hose 11.

When the fuel dispensing apparatus 1 is not used, the piping component 5 is in the second position (Fig. 4a). The flexible dispensing hose 11 is connected to the fuel outlet 10 of the piping component 5. When the fuel dispensing apparatus 1 is used, and the flexible dispensing hose 11 is pulled out from its resting position, the pulling force on the hose 11 is transferred to the resilient means 7 of the piping component 5, thereby forcing the fuel outlet 10 of the piping component 5 to move to the first position (Fig. 4b). When the dispensing nozzle 12 after use is returned to the nozzle boot 17, the resilient means 7 of the piping component 5 return the piping component 5 to its second position. Thus, the flexible dispensing hose 11 is caused to fall close to the fuel dispensing apparatus 1. The resilient means 7 could be of any suitable type, e.g. a coil spring, an elastomeric piece of material etc.

In a second embodiment, the piping component 5 is substantially S-shaped as illustrated in Fig. 5a. The resilient means 7 is formed integrally with the piping component 5 and comprises, for example, a spiral spring connected between and biasing the first 6 and second 8 piping component parts. Fig. 5b illustrates the first position (second part 8 with dashed line) and the second position (second part 8 with solid line) of the piping component 5.

In a third embodiment, which is illustrated by Fig. 6, the resilient element 7 of the piping component 5 has one end connected to the second part 8 of the piping component 5 while the other end is connected to the upper housing 14, preferably inside the recess 18. As shown in Fig. 5, a control means 20 is arranged to define the second position of the piping component 5, and the piping component 5 is illustrated in its second position. The resilient element 7 could be of any suitable type, e.g. a coil spring, a rubber string or another type of elastomeric piece of material.

Preferably the fuel hose 11 unextractable, i.e. the length of the hose 11 outside the fuel dispensing apparatus 1 is always substantially constant.

In a further embodiment, as illustrated in Fig. 3, the column 16 comprises a recess 19 for receiving the hose 11 when the piping component 5 is in its second position.

The lower housing 13 may be connected to the upper housing 14 via two columns 16, 21, and of course may the dispensing apparatus 1 be fitted with a plurality of hoses, which each are connected to a fuel line via a respective piping component.

Depending on how the resilient element 7 is arranged to act on the piping component 5, the resilient element 7 may by an elastic band, a tension spring, compression spring, leaf spring, torsion spring, coil spring etc., made of any suitable material.

## Claims

1. A fuel dispensing apparatus comprising
a fuel line (3) for transporting fuel from a fuel reservoir (2),
a flexible fuel dispensing hose (11) for dispensing the fuel, e.g. to a vehicle, and
a piping component (5) configured to connect the fuel dispensing hose (11) to the fuel line (3), said piping component (5) comprising a fuel inlet (9) connected to the fuel line (3) and a fuel outlet (10) connected to the fuel dispensing hose (11),
**characterized in that** the piping component comprises a resilient element (7) configured to move the piping component (5) from a first position to a second position.

2. A fuel dispensing apparatus according to claim 1, further comprising a lower housing (13) and at least one column (16) connecting an upper housing (14) with the lower housing (14), the piping component (5) being arranged at the upper housing (14).

3. A fuel dispensing apparatus according to claim 2, wherein the upper housing (14) comprises a recess (18) for the fuel dispensing hose (11).

4. A fuel dispensing apparatus according to any one of claims 1-3, wherein the piping component (5) comprises a swivel.

5. A fuel dispensing apparatus according to any one of claims 1-4, wherein the piping component (5) comprises a control means (20) for defining the second position of the piping component (5).

6. A fuel dispensing apparatus according to any one of claims 1-5, wherein the piping component (5) comprises a first part (6) comprising the fuel inlet (9), and a second part (8) comprising the fuel outlet (10) and being movable in relation to the first part (6).

7. A fuel dispensing apparatus according to claim 6, wherein an upper part (15) of the fuel dispensing hose (11) is connected to the second part (8) of the piping component (5), and wherein the resilient element (7) is configured to bias the second part (8) for moving the upper part (15) of the fuel dispensing hose (11) in a substantially horizontal direction towards the fuel dispensing apparatus (1).

8. A fuel dispensing apparatus according to claim 6 or 7, wherein an upper part (15) of the fuel dispensing hose is configured to hang, in a downward direction, from the second part (8) of the piping component (5).

9. A fuel dispensing apparatus according to any one of claims 6-8, wherein the resilient element (7) is configured to move the second part (8) of the piping component (5) from said first position to said second position.

10. A fuel dispensing apparatus according to any one of claims 6-9, wherein the second part (8) is configured to pivot about a substantially horizontal axis, from said first position to said second position.

11. A fuel dispensing apparatus according to any one of claims 6-10, wherein the resilient means (7) comprises a first end connected to the first part (6) of the piping component (5) and a second end connected to the second part (8) of the piping component (5).

12. A fuel dispensing apparatus according to any one of claims 2-10, wherein the resilient means (7) comprises a first end connected to the upper housing (14), and a second end connected to the piping component (5).
